# EUROPÄISCHE PATENTSCHRIFT

(11) **EP 3 749 883 B1**
(45) Veröffentlichungstag und Bekanntmachung des Hinweises auf die Patenterteilung: **07.06.2023**
(21) Anmeldenummer: 18795962.2
(22) Anmeldetag: 22.10.2018
(51) Int. Cl.: F16K 15/02, F16F 9/348, F16F 1/02

(54) **FEDER FÜR EIN RÜCKSCHLAGVENTIL, RÜCKSCHLAGVENTIL MIT EINER DERARTIGEN FEDER, REGELBARER SCHWINGUNGSDÄMPFER MIT EINEM SOLCHEN RÜCKSCHLAGVENTIL SOWIE KRAFTFAHRZEUG MIT EINEM DERARTIGEN REGELBAREN SCHWINGUNGSDÄMPFER**
SPRING FOR A CHECK VALVE, CHECK VALVE HAVING A SPRING OF THIS KIND, CONTROLLABLE VIBRATION DAMPER HAVING SUCH A CHECK VALVE, AND MOTOR VEHICLE HAVING A CONTROLLABLE VIBRATION DAMPER OF THIS KIND
RESSORT POUR UNE SOUPAPE DE RETENUE, SOUPAPE DE RETENUE POURVUE D'UN TEL RESSORT, AMORTISSEUR DE VIBRATIONS RÉGLABLE POURVU D'UNE TELLE SOUPAPE DE RETENUE AINSI QUE VÉHICULE DOTÉ D'UN TEL AMORTISSEUR DE VIBRATIONS RÉGLABLE

(30) Priorität: 07.02.2018 DE 102018102758
(43) Veröffentlichungstag der Anmeldung: 16.12.2020
(73) Patentinhaber: Kendrion (Villingen) GmbH, 78048 Villingen-Schwenningen (DE)
(72) Erfinder: BERGFELD, Björn, 72336 Balingen-Endingen (DE)
(74) Vertreter: Westphal, Mussgnug & Partner Patentanwälte mbB
(86) Internationale Anmeldenummer: PCT/EP2018/078865
(87) Internationale Veröffentlichungsnummer: WO 2019/154533

(56) Entgegenhaltungen:
- US-A- 5 211 372
- US-A1- 2010 181 518
- US-A1- 2012 045 158
- US-B1- 7 748 683

## Beschreibung

Die vorliegende Erfindung betrifft eine Feder für ein Rückschlagventil sowie ein Rückschlagventil mit einer derartigen Feder. Darüber hinaus betrifft die Erfindung einen regelbare Schwingungsdämpfer, der ein solches Rückschlagventil umfasst sowie ein Kraftfahrzeug mit einem derartigen regelbaren Schwingungsdämpfer.

Regelbare Schwingungsdämpfer sind beispielsweise aus der DE 38 03 888 C2 bekannt und werden insbesondere zur Dämpfungskraftsteuerung von Kraftfahrzeugen eingesetzt, um das Fahrzeug je nach Erfordernissen der Fahrstrecke anzupassen. Dies kann in einem Regelkreis des Kraftfahrzeugs selbsttätig und automatisch erfolgen. Es ist jedoch auch möglich, dass der Dämpfungskraftverlauf manuell vom Fahrer eingestellt wird. Die konstruktive Ausführung des Schwingungsdämpfers ist regelmäßig so gestaltet, dass es möglich wird, die Bewegung von Aufbau und Radaufhängung des Kraftfahrzeugs zu erfassen und in solchen Bewegungszuständen eine große Dämpfungskraft zu wählen, in denen die Richtung der erzeugten Dämpfungskraft der Bewegung des Fahrzeugaufbaus entgegengerichtet ist. Eine kleine Dämpfungskraft wird dann gewählt, wenn die Dämpfungskraft und Aufbaubewegung des Kraftfahrzeugs gleichgerichtet sind. Allerdings kann der Fahrer hier ebenfalls die von ihm gewünschte Dämpfungskraft immer häufiger selbst manuell einstellen. In der DE 38 03 888 C2 verfügt die an den Arbeitszylinder angeschlossene Ventileinrichtung hierfür über zwei Dämpfungselemente, die jeweils einzeln oder gemeinsam in den Strömungsweg schaltbar sind und die für die Zug- und Druckdämpfung jeweils zwei antiparallel geschaltete Rückschlagventile aufweisen.

Einen anderen regelbaren Schwingungsdämpfer zeigt die EP 2 470 809 B1. Der darin beschriebene Schwingungsdämpfer für eine Radaufhängung eines Kraftfahrzeugs ist mit einer Ventileinrichtung versehen, die innerhalb eines Dämpfer- bzw. als Arbeitszylinder eingebaut ist. Die dortige Ventileinrichtung verfügt über zwei als Dämpfungsventile bezeichnete Hauptschieber, die über ein schaltbares Schaltventil verbunden sind. Zusätzlich verfügt die dortige an den Arbeitszylinder angeschlossene Ventileinrichtung über mehrere Rückschlagventile.

Im Bestreben, den begrenzt vorhandenen Bauraum in einem Kraftfahrzeug so optimal wie möglich zu nutzen, soll auch der von den Rückschlagventilen benötigte Bauraum verringert werden, insbesondere auch deshalb, da je nach Ausbildung der regelbaren Schwingungsdämpfer eine relativ hohe Anzahl von Rückschlagventilen benötigt wird.

Auch wenn der Bauraum der Rückschlagventile verringert werden soll, soll gleichzeitig ein ausreichender Volumenstrom mit den Rückschlagventilen bei möglichst geringem Druckverlust realisiert werden können. Folglich muss ein ausreichend großer Ventilhub vorhanden sein. Die üblicherweise bei Rückschlagventilen eingesetzten Spiralfedern benötigen selbst einen relativ großen Bauraum.

Federn, die für Rückschlagventile eingesetzt werden können, sind in der US 2010/181518 A1, der US 7 748 683 B1, der US 2012/045158 A1 und der US 5 211 372 A offenbart.

Aufgabe einer Ausführungsform der vorliegenden Erfindung ist es daher, eine Feder für ein Rückschlagventil zu entwickeln, welche einen geringen Bauraum benötigt und selbst bei einem vergleichsweise großen Ventilhub zumindest annähernd dauerfest ist, also im Vergleich zu bekannten Federn deutlich später versagt. Weiterhin ist es eine Aufgabe einer Ausführungsform der Erfindung, ein Rückschlagventil anzugeben, welches trotz eines geringen Bauraums einen großen Volumenstrom bei geringem Druckverlust bereitstellt.

Diese Aufgabe wird mit den in den Ansprüchen 1, 9, 15 und 16 angegebenen Merkmalen gelöst. Vorteilhafte Ausführungsformen sind Gegenstand der Unteransprüche.

Eine Ausführungsform der Erfindung betrifft eine Feder für ein Rückschlagventil, welches insbesondere in regelbaren Schwingungsdämpfern verwendbar ist, umfassend einen flächigen Grundkörper mit einer ersten Oberfläche und einer zweiten Oberfläche sowie einem Mittelpunkt, zwei oder mehrere Federarme, die federnd mit dem Grundkörper zusammenwirken und die sich im entlasteten Zustand von der ersten Oberfläche oder der zweiten Oberfläche erheben, wobei die Federarme ein freies Ende bilden und eine Längsachse aufweisen, welche durch das freie Ende und tangential zu einem Kreis um den Mittelpunkt des Grundkörpers verläuft.

Im Rahmen der vorliegenden Beschreibung soll unter dem Begriff "federnd mit dem Grundkörper zusammenwirken" verstanden werden, dass die Federarme unter Belastung eine zwischen dem Grundkörper und den Federarmen wirkende Rückstellkraft erzeugen. Unter freiem Ende soll das Ende der Federarme verstanden werden, welches nicht mit dem Grundkörper verbunden ist.

Beispielsweise von batteriebetriebenen Vorrichtungen wie Taschenlampen sind federnde Kontakte bekannt, mit denen die Batterien gegen einen am gegenüberliegenden Ende der Batterie liegenden, weiteren Kontakt gedrückt werden. Diese Kontakte können auch einen mit einem Grundkörper federnd zusammenwirkenden Federarm aufweisen, wie beispielsweise in der DE 10 2015 119 767 A1 bekannt. Batterien müssen aber möglichst zentrisch kontaktiert werden, so dass diese Kontakte von nur einem Federarm gebildet wird, der zudem nicht tangential zu einem Mittelpunkt des Grundkörpers verläuft. Für dynamische Belastungen sind derartige Kontakte auch nicht ausgelegt.

Aufgrund der tangentialen Ausrichtung der Federarme bezogen auf den Mittelpunkt des Grundkörpers können mehrere Federarme vorgesehen werden, ohne dass diese sich gegenseitig stören. Es ist möglich, eine Anzahl von ersten Federarmen auf einem ersten Kreis mit einem ersten Durchmesser und eine Anzahl von zweiten Federarmen auf einem zweiten Kreis mit einem zweiten Durchmesser vorzusehen. Die Anzahl der Federarme kann variieren. Folglich wird der vorhandene Bauraum optimal ausgenutzt und eine vergleichsweise hohe Rückstellkraft bereitgestellt. Aus fertigungstechnischen Gründen hat sich eine Anzahl von drei Federarmen als optimal herausgestellt. Einerseits lässt sich die Fertigung einfach und damit weitgehend störungsfrei gestalten und andererseits eine statisch definierte Anlage der Federarme am betreffenden benachbart angeordneten Bauteil erreichen.

Im Vergleich zu Spiralfedern werden die vorschlagsgemäßen Federarme ausschließlich auf Biegung und nicht auf Torsion belastet. Das verwendete Material kann speziell auf die vorliegende Biegebelastung hin optimiert ausgewählt werden. Die Spannungszustände in der Feder sind weniger komplex, was dazu führt, dass die Anzahl der Ventilhübe, die zu einem Versagen der Feder führt, im Vergleich zu Spiralfedern deutlich erhöht werden kann, so dass die vorschlagsgemäße Feder dauerfest oder nahezu dauerfest ist.

Zudem lässt sich ein vergleichsweise großer Ventilhub realisieren, ohne dass die Feder die Dauerfestigkeit verliert. Mit der vorschlagsgemäßen Feder lassen sich Ventilhübe von 1,2 mm oder mehr realisieren, wodurch sich das mit der vorschlagsgemäßen Feder ausgestattete Rückschlagventil mit einem höheren Volumenstrom bei einem geringeren Druckverlust betreiben lässt.

Erfindungsgemäß bilden die Federarme jeweils eine Biegelinie mit dem Grundkörper, welche senkrecht zur Längsachse verlaufen. Die Biegelinie definiert die Linie, entlang welcher die Federarme gegenüber dem Grundkörper gebogen werden oder sind. Aufgrund dieser Ausrichtung der Biegelinien in Bezug auf die Längsachse der Federarme wird sichergestellt, dass keine Torsionskräfte, sondern nur reine Biegekräfte in der Feder wirken, wodurch die vorschlagsgemäße Feder dauerfest oder nahezu dauerfest ist.

Nach Maßgabe einer weiteren Ausführungsform werden die Federarme vom Grundkörper gebildet. Es ist möglich, die Federarme separat zu fertigen und in einem weiteren Fertigungsschritt mit dem Grundkörper zu verbinden. Dies ist aber vergleichsweise aufwendig. Die Fertigung lässt sich deutlich vereinfachen, wenn die Federarme gemäß dieser Ausführungsform vom Grundkörper gebildet werden und die Feder von vorne herein einstückig ausgebildet ist. Der Grundkörper muss nur noch mit entsprechenden, die Federarme umrandenden und Biegelinien definierenden Aussparungen versehen werden. Anschließend werden die Federarme durch Biegen des Grundkörpers an den entsprechenden Biegelinien bereitgestellt.

In einer weitergebildeten Ausführungsform kann die Feder aus Federstahl gefertigt sein. Unter Federstahl soll ein Stahl verstanden werden, welcher im Vergleich zu anderen Stählen eine höhere Festigkeit und eine besonders hohe Elastizitätsgrenze besitzt. Die Werkstoffnummern 1.4310, 1.5023, 1.7108, 1.7701, 1.8159 und 1.1231 bezeichnen beispielhaft einige Federstähle. Aufgrund der hohen Elastizitätsgrenze der Federstähle können die Federarme besonders starken Biegebeanspruchungen ausgesetzt werden, ohne dass es zu einem Versagen kommt.

Erfindungsgemäß wird die Feder so gestaltet, dass die Federarme jeweils eine Biegelinie mit dem Grundkörper bilden und der Grundkörper parallel zueinander verlaufende Rillen aufweisen, wobei die Biegelinien nicht parallel zu den Rillen verlaufen. Stähle werden bei der Herstellung in vielen Fällen gewalzt, um den Stahl in Form von aufgewickelten Stahlbändern transportfähig bereitzustellen. Üblicherweise werden hierzu zwei oder mehrere parallel zueinander ausgerichtete zylindrische Walzen verwendet, wodurch sich auf der Oberfläche der Stahlbänder die parallel zueinander verlaufenen Rillen bilden. Diese Rillen wirken als Kerben, so dass für den Fall, dass die Biegelinien parallel zu den Rillen verlaufen, Spannungsspitzen erzeugt werden, wodurch die Federarme schon bei vergleichsweise geringen Belastungen brechen. Dadurch, dass die Biegelinie nach dieser Ausführungsform nicht parallel zu den Rillen verläuft, sondern einen Winkel mit den Rillen einschließt, werden derartige Spannungsspitzen und ein vorzeitiges Versagen verhindert. Bei einer weiteren Ausführungsform können die Federarme jeweils einen das freie Ende umfassenden Anlagebereich aufweisen, der gegenüber dem übrigen Federarm abgewinkelt ist. Wie bereits zuvor erörtert, erheben sich die Federarme von der ersten oder zweiten Oberfläche und stehen daher mit einem bestimmten Winkel von der jeweiligen Oberfläche ab. Bei der Anlage an benachbart angeordneten Bauteilen mit dem freien Ende würde eine Punkt- oder Linienberührung entstehen, was lokal zu hohen Belastungen führen kann. Der Anlagebereich ist so gegenüber dem übrigen Federarm so abgewinkelt, dass der Federarm dort mit dem benachbart angeordneten en Bauteil in Berührung kommt, wo der Anlagebereich in den übrigen Federarm übergeht. Der Übergang hat einen vergleichsweise großen Radius. Bei den Relativbewegungen, welche zwischen dem Federarm und dem benabarten Bauteil beim Komprimieren und Entspannen stattfinden, wird aufgrund der Berührung im Übergang die zwischen dem Federarm und dem benachbart angeordneten Bauteil wirkende Reibkraft gering gehalten, so dass eine gleitende Relativbewegung realisiert wird.

Eine weitergebildete Ausführungsform zeichnet sich dadurch aus, dass der Grundkörper Anschlagabschnitte aufweist, an welche die Federarme zum Begrenzen des maximalen Federwegs anschlagen. Die Anschlagabschnitte begrenzen somit die maximal mögliche Kompression der Feder, wodurch auch das maximale Biegemoment, welches auf die Federarme wirkt, begrenzt wird. Daher wird die Feder vor einer zu hohen Belastung geschützt und es wird verhindert, dass die Federarme brechen.

Nach Maßgabe einer weiteren Ausführungsform weist der Grundkörper einen Aufnahmedurchbruch auf. Der Aufnahmedurchbruch dient dazu, die Feder beispielsweise auf einem Montagedorn zu montieren, wozu der Montagedorn durch den Aufnahmedurchbruch geführt oder die Feder auf den Montagedorn aufgeschoben wird. Die Montage und die korrekte Ausrichtung der Feder werden hierdurch vereinfacht.

Eine weitere Ausführungsform zeichnet sich dadurch aus, dass der Aufnahmedurchbruch zumindest abschnittsweise von den Federarmen begrenzt wird. Hierdurch kann das Material des Grundkörpers gering gehalten werden. Um jedoch von dem Montagedorn übertragene Belastungen der Federarme zu vermeiden, bietet es sich an den Aufnahmedurchbruch so zu gestalten, dass kein Kontakt zwischen den Federarmen und dem Montagedorn entsteht. Dies kann beispielsweise durch radial nach innen weisende Vorsprünge erreicht werden, welche den Kontakt zwischen dem Montagedorn und dem Grundkörper herstellen.

Eine weitere Ausführungsform ist dadurch gekennzeichnet, dass der Grundkörper zumindest einen Verdrehsicherungsabschnitt aufweist, um die Feder gegenüber einem benachbart angeordneten Bauteil verdrehsicher festzulegen. Der Verdrehsicherungsabschnitt kann beispielsweise Bohrungen im Grundkörper umfassen, durch welche Stifte des benachbart angeordneten Bauteils geführt werden können. Alternativ können radial nach außen weisende Erweiterungen vorgesehen sein, welche in entsprechende Ausnehmungen des benachbart angeordneten Bauteils eingreifen. Auch ist es möglich, den Grundkörper mit geraden radial äußeren Kanten zu versehen, welche an ebenfalls geraden Kanten eines benachbart angeordneten Bauteils anliegen. Mit der Möglichkeit, die Feder verdrehsicher festzulegen, kann eine definierte Ausrichtung der Feder gegenüber dem benachbart angeordneten Bauteil eingestellt und im Betrieb beibehalten werden.

Eine Ausgestaltung der Erfindung betrifft ein Rückschlagventil insbesondere für regelbare Schwingungsdämpfer, umfassend einen Ventilsitz, eine Dichtscheibe, mit welcher das Rückschlagventil verschließbar oder geschlossen ist, wenn die Dichtscheibe am Ventilsitz anliegt, und eine Feder nach einem der zuvor diskutierten Ausführungsformen, mit welcher die Dichtscheibe in Anlage an den Ventilsitz gedrückt wird.

Die technischen Effekte und Vorteile, die sich mit dem vorschlagsgemäßen Rückschlagventil erreichen lassen, entsprechen denjenigen, die für die vorliegende Feder erörtert worden sind. Zusammenfassend sei darauf hingewiesen, dass aufgrund der vorschlagsgemäßen Gestaltung der Feder das Rückschlagventil sehr kompakt ausgeführt werden kann und daher nur einen geringen Bauraum benötigt. Dennoch kann ein vergleichsweise großer Ventilhub realisiert werden, wodurch das Rückschlagventil mit einem hohen Volumenstrom bei einem gleichzeitig geringen Druckverlust betrieben werden kann. Aufgrund der Tatsache, dass die Feder dauerfest oder nahezu dauerfest ausgeführt wird, ist die Wahrscheinlichkeit des Ausfalls des Rückschlagventils infolge eines Versagens der Feder so gut wie ausgeschlossen.

In einer weiteren Ausgestaltung kann der Grundkörper der Feder einen Aufnahmedurchbruch aufweisen, und das Rückschlagventil einen Aufnahmekörper, auf den die Feder axial bewegbar aufschiebbar ist, wobei der Aufnahmekörper den Aufnahmedurchbruch durchdringt, und einen Anschlagkörper aufweisen, mit dem die Bewegbarkeit der Feder gegenüber dem Aufnahmekörper begrenzbar ist. Der Aufnahmekörper wirkt als ein Montagedorn, auf den der Grundkörper aufgeschoben wird. Die Position der Feder in radialer Richtung ist somit ausreichend genau bestimmt. Der Anschlagkörper dient vorwiegend dazu zu verhindern, dass die Feder während der Montage vom Aufnahmekörper abrutscht. Im montieren Zustand des Rückschlagventils wird die axiale Position der Feder von den Federarmen festgelegt. Der Anschlagkörper kann beispielsweise mit dem Aufnahmekörper verschraubt oder auf den Aufnahmekörper aufgepresst werden.

Gemäß einer weitergebildeten Ausgestaltung weist die Dichtscheibe eine Aufnahmeöffnung auf und ist auf den Aufnahmekörper axial bewegbar aufschiebbar, wobei der Aufnahmekörper die Aufnahmeöffnung durchdringt und die Bewegbarkeit der Dichtscheibe gegenüber dem Aufnahmekörper mit dem Anschlagkörper begrenzbar ist. Die Montage des Rückschlagventils wird hierdurch vereinfacht, da neben der Feder auch die Dichtscheibe auf den Aufnahmekörper aufgeschoben werden kann und somit in ihrer radialen Position ausreichend festgelegt ist.

Eine weitere Ausgestaltung zeichnet sich dadurch aus, dass der Aufnahmekörper zumindest einen Absatz aufweist, gegen welchen die Dichtscheibe zum Begrenzen des maximalen Federwegs anschlagen kann. Der Absatz begrenzt somit die maximal mögliche Kompression der Feder, wodurch auch das maximale Biegemoment, welches auf die Federarme wirkt, begrenzt wird. Daher wird die Feder vor einer zu hohen Belastung geschützt und es wird verhindert, dass die Federarme brechen.

Nach einer fortgebildeten Ausgestaltung umfasst das Rückschlagventil einen Basiskörper, der eine Ventillängsachse definiert und zumindest einen im Wesentlichen entlang der Ventillängsachse verlaufenden ersten Kanal und zumindest einen im Wesentlichen senkrecht zur Ventillängsachse verlaufenden zweiten Kanal aufweist, wobei der zweite Kanal entlang der Ventillängsachse einseitig geöffnet ist. Weiterhin umfasst das Rückschlagventil einen den zumindest einen zweiten Kanal entlang der Ventillängsachse im montierten Zustand des Rückschlagventils abschließenden Verschlusskörper, wobei der Aufnahmekörper zwischen dem Basiskörper und dem Verschlusskörper angeordnet ist.

Der Basiskörper und der Verschlusskörper bilden die zwei wesentlichen Körper des Rückschlagventils, zwischen denen der Aufnahmekörper angeordnet ist. Wie bereits oben erörtert, werden die Feder und die Dichtscheibe auf den Aufnahmekörper aufgeschoben und mit dem Anschlagkörper axial gesichert. Zur Montage muss der Aufnahmekörper nur noch zwischen dem Basiskörper und dem Verschlusskörper positioniert werden. Der Basiskörper und/oder der Verschlusskörper können Positionierungshilfen aufweisen, um die Position des Aufnahmekörpers mit einer ausreichenden Genauigkeit festlegen zu können. Anschließend werden der Basiskörper und der Verschlusskörper miteinander verbunden, wodurch die Montage des Rückschlagventils bereits abgeschlossen ist. Der Verschlusskörper muss gegenüber dem Basiskörper dichten, was beispielsweise unter Verwendung eines Presssitzes oder eines O-Rings geschehen kann. Die Montage des Rückschlagventils ist daher einfach.

Eine weitere Ausgestaltung zeichnet sich dadurch aus, dass zwischen dem Aufnahmekörper und dem Anschlagkörper zumindest ein Toleranzausgleichskörper fest angeordnet ist, der im montierten Zustand des Rückschlagventils am Basiskörper oder am Verschlusskörper anliegt. Der Toleranzausgleichskörper gleicht Fertigungsungenauigkeiten des Basiskörpers und des Verschlusskörpers aus. Zudem kann der Toleranzausgleichskörper so im Rückschlagventil angeordnet werden, dass die Dichtscheibe abschnittsweise im geschlossenen Zustand des Rückschlagventils am Toleranzausgleichskörper anliegt. Sowohl mit der Dicke der Dichtscheibe als auch mit der Dicke des Toleranzausgleichskörpers kann die Rückstellkraft der Feder verändert und an die jeweiligen Anwendungsfälle angepasst werden.

Eine Ausführung der Erfindung betrifft einen regelbaren Schwingungsdämpfer, insbesondere für Kraftfahrzeuge, mit einem Arbeitszylinder, einem im Arbeitszylinder hin- und her bewegbaren Kolben, der den Arbeitszylinder in einen ersten Arbeitsraum und einen zweiten Arbeitsraum unterteilt, wobei der erste Arbeitsraum und der zweite Arbeitsraum über jeweils eine Druckmittelleitung mit einer Ventileinrichtung zum Regeln des Schwingungsdämpfers verbunden sind und die Ventileinrichtung zumindest ein Rückschlagventil nach einem der zuvor diskutierten Ausgestaltungen umfasst.

Eine Umsetzung der Erfindung betrifft ein Kraftfahrzeug mit einem Schwingungsdämpfer nach der zuvor erläuterten Ausführung.

Eine Realisierung der Erfindung betrifft die Verwendung der vorschlagsgemäßen Feder in Rückschlagventilen von regelbaren Schwingungsdämpfern.

Die technischen Effekte und Vorteile, die sich mit dem vorschlagsgemäßen Schwingungsdämpfer, dem Kraftfahrzeug und der Verwendung der vorschlagsgemäßen Feder erreichen lassen, entsprechen denjenigen, die für die vorliegende Feder und das vorliegende Rückschlagventil erörtert worden sind. Zusammenfassend sei darauf hingewiesen, dass aufgrund der vorschlagsgemäßen Gestaltung der Feder das Rückschlagventil sehr kompakt ausgeführt werden kann und daher nur einen geringen Bauraum benötigt. Folglich kann auch der Schwingungsdämpfer, unter dem auch ein Stoßdämpfer eines Kraftfahrzeugs zu verstehen ist, entsprechend kompakt ausgeführt werden. Dennoch kann ein vergleichsweise großer Ventilhub realisiert werden, wodurch das Rückschlagventil mit einem hohen Volumenstrom bei einem gleichzeitig geringen Druckverlust betrieben werden kann. Aufgrund der Tatsache, dass die Feder dauerfest oder nahezu dauerfest ausgeführt wird, ist die Wahrscheinlichkeit des Ausfalls des Rückschlagventils und des Schwingungsdämpfers infolge eines Versagens der Feder so gut wie ausgeschlossen. Der Schwingungsdämpfer und folglich das Kraftfahrzeug können daher über einen sehr langen Zeitraum störungsfrei betrieben werden.

Beispielhafte Ausführungsformen der Erfindung werden im Folgenden unter Bezugnahme auf die beigefügten Zeichnungen näher erläutert. Es zeigen
- Figur 1A: eine Seitenansicht einer ersten Ausführungsform einer erfindungsgemäßen Feder im noch nicht fertiggestellten Zustand,
- Figur 1B: eine Draufsicht auf die in Figur 1A dargestellte Feder,
- Figur 1C: eine Seitenansicht der in den Figuren 1A und 1B gezeigten Feder im Einbauzustand und im minimal belasteten Zustand,
- Figur 1D: eine Seitenansicht der in den Figuren 1A und 1B gezeigten Feder im maximal belasteten Zustand,
- Figuren 2A bis 2D: verschiedene Ansichten analog zu den Figuren 1A bis 1D einer zweiten Ausführungsform einer erfindungsgemäßen Feder,
- Figur 3A: eine Schnittdarstellung einer Ausführungsform eines erfindungsgemäßen Rückschlagventils,
- Figur 3B: eine vergrößerte Darstellung des in Figur 3A gekennzeichneten Bereichs X, und
- Figur 4: eine prinzipielle Darstellung eines Kraftfahrzeugs mit einem Schwingungsdämpfer, welcher ein erfindungsgemäßes Rückschlagventil umfasst.

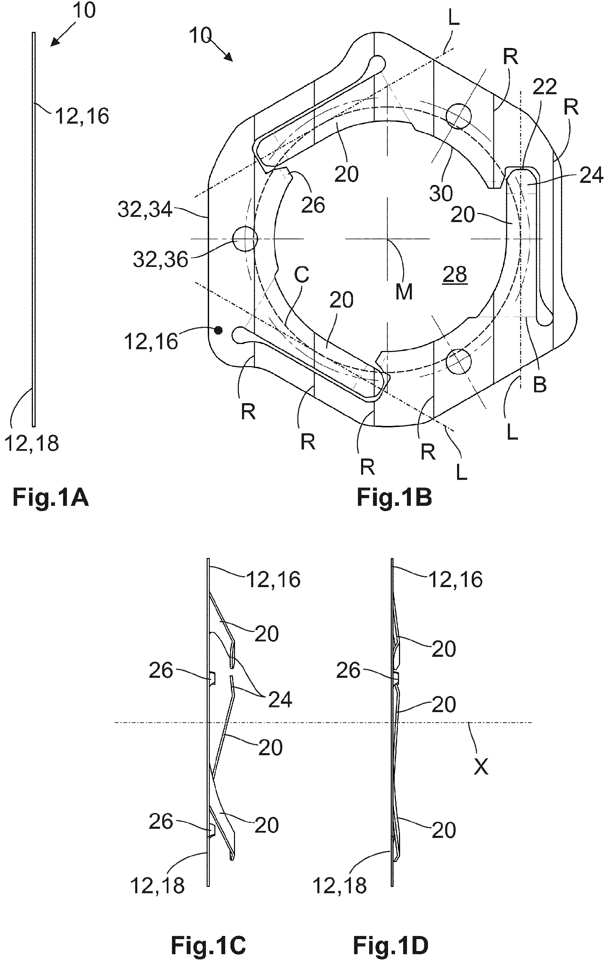

In Figur 1A ist ein erstes Ausführungsbeispiel einer erfindungsgemäßen Feder 10 anhand einer Seitenansicht und in Figur 1B anhand einer Draufsicht gezeigt, wobei sich die Feder 10 im noch nicht fertig montierten Zustand befindet. Die Feder 10 weist einen flächigen und in diesem Fall scheibenförmigen Grundkörper 12 mit einem Mittelpunkt M auf, der eine erste Oberfläche 16 und eine zweite Oberfläche 18 bildet. Darüber hinaus bildet der Grundkörper 12 drei Federarme 20, welche eine längliche Form und jeweils ein freies Ende 22 aufweisen. Die Federarme 20 werden von entsprechenden Ausschnitten im Grundkörper 12 definiert. Die Federarme 20 definieren jeweils eine Längsachse L, welche durch das freie Ende 22 verläuft. Die Federarme 20 sind so ausgebildet und ausgerichtet, dass ihre Längsachsen L tangential zu einem Kreis C um den Mittelpunkt M des Grundkörpers 12 verlaufen. Zudem sind die Federarme 20 gleichmäßig über den Umfang des Kreises C verteilt, so dass die Längsachsen L einen Winkel von 120° untereinander einschließen. Abweichungen, beispielsweise größere Winkel als 120°, sind in bestimmten Grenzen möglich. Auch von der streng tangentialen Ausrichtung der Längsachsen kann in bestimmten Grenzen abgewichen werden.

In den Figuren 1C und 1D ist die Federachse X erkennbar, die durch den Mittelpunkt M verläuft und die vom Grundkörper 12 definiert wird. Wie aus den Figuren 1C und 1D erkennbar, erheben sich die Federarme 20 im fertiggestellten Zustand der Feder 10 in diesem Fall von der ersten Oberfläche 16. Hierzu werden die Federarme 20 um eine Biegelinie B mit einem bestimmten Biegewinkel gebogen, welche insbesondere in der Figur 1B gut erkennbar ist. Die Biegelinie B verläuft senkrecht zur Längsachse L des betreffenden Federarms 20.

Weiterhin ist insbesondere aus Figur 1C erkennbar, dass die Federarme 20 einen das freie Ende 22 umfassenden Anlagebereich 24 aufweisen, der gegenüber dem übrigen Federarm 20 abgewinkelt ist. Auch der Anlagebereich 24 wird durch Biegen hergestellt. Der Anlagebereich 24 ist so ausgebildet, dass er im entlasteten Zustand im Wesentlichen parallel zur ersten Oberfläche 16 verläuft oder etwas zur ersten Oberfläche 16 hin geneigt ist.

Darüber hinaus ist aus der Figur 1B erkennbar, dass der beispielsweise aus Federstahl bestehende Grundkörper 12 fertigungsbedingte Rillen R auf der ersten und der zweiten Oberfläche 18 aufweist, von denen in Figur 1B nur einige exemplarisch dargestellt sind. Die Rillen R verlaufen parallel zueinander. Die Biegelinien B, um welche die Federarme 20 bei der Herstellung der Feder 10 gebogen werden, verlaufen nicht parallel zu den Rillen R, sondern schließen einen Winkel mit den Rillen R ein. Die Biegelinien B der beiden bezogen auf Figur 1B linken Federarme 20 schließen einen Winkel von ca. 60° und die Biegelinie B des rechten Federarms schließt einen Winkel von ca. 90° mit den Rillen R ein.

Weiterhin ist aus der Figur 1B erkennbar, dass der Grundkörper 12 insgesamt drei Anschlagabschnitte 26 aufweist, die durch Umbiegen um eine Biegekante mit einem Biegewinkel von ca. 90° hergestellt werden, was aus der Figur 1C hervorgeht. An den Anschlagabschnitten 26 schlagen benachbart angeordnete Bauteile an, so dass der maximale Federweg, um den die Federarme 20 gebogen werden können, begrenzt wird. Eine Überbelastung der Federarme 20 wird hierdurch verhindert.

Des Weiteren ist der Grundkörper 12 mit einem Aufnahmedurchbruch 28 versehen, der im Wesentlichen einen kreisförmigen Querschnitt aufweist. Radial nach außen wird der Aufnahmedurchbruch 28 zumindest im Montagezustand, der in den Figuren 1A und 1B gezeigt wird, von den Federarmen 20 und von drei kreisbogenförmigen Abschnitten 30 begrenzt, die von radial nach innen weisenden Vorsprüngen des Grundkörpers 12 gebildet werden. Nur mit diesen kreisbogenförmigen Abschnitten 30 liegt die Feder 10 beispielsweise an einem Montagedorn an, wie später noch genauer erläutert werden wird. Ein Anliegen des Montagedorns an den Federarmen 20 wird daher verhindert und eine Übertragung von Reibkräften vom Montagedorn auf die Federarme 20 und ein Schleifen verhindert.

Darüber hinaus bildet der Grundkörper 12 insgesamt drei Verdrehsicherungsabschnitte 32, die im in den Figuren 1A bis 1D gezeigten Ausführungsbeispiel jeweils eine gerade Kante 34 umfassen, die radial außen am Grundkörper 12 angeordnet ist. Mit diesen Kanten 34 kann die Feder 10 an einem entsprechend geformten benachbart angeordneten Bauteil anliegen. Weiterhin umfassen die Verdrehsicherungsabschnitte 32 jeweils eine Bohrung 36, die ebenfalls auf entsprechend angeordnete Pins eines benachbart angeordneten Bauteils aufgeschoben werden können. Mit beiden Maßnahmen kann ein unkontrolliertes Verdrehen der Feder 10 im Betrieb verhindert werden.

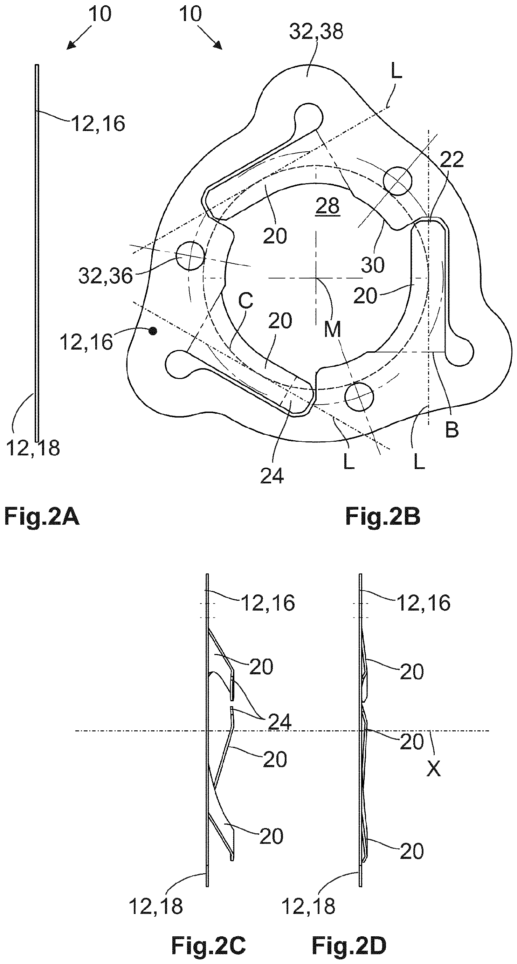

In den Figuren 2A bis 2D ist ein zweites Ausführungsbeispiel der erfindungsgemäßen Feder 10 auf dieselbe Weise wie das erste Ausführungsbeispiel dargestellt. Der maximale Durchmesser des Grundkörpers 12 der Feder 10 nach dem zweiten Ausführungsbeispiel ist geringer als derjenige nach dem ersten Ausführungsbeispiel. Entsprechend ist die Länge der Federarme 20 geringer als im ersten Ausführungsbeispiel.

Weiterhin ist der Verdrehsicherungsabschnitt 32 anders ausgebildet und weist drei radial nach außen weisende Erweiterungen 38 auf, die in entsprechende Ausnehmungen eines benachbart angeordneten Bauteils eingreifen können. Der Grundkörper 12 nach dem zweiten Ausführungsbeispiel weist die Anschlagabschnitte 26 nicht auf.

Im Übrigen ist der Aufbau der Feder 10 nach dem zweiten Ausführungsbeispiel im Wesentlichen gleich dem des ersten Ausführungsbeispiels. Aus Darstellungsgründen sind die Rillen R in Figur 2B nicht eingezeichnet.

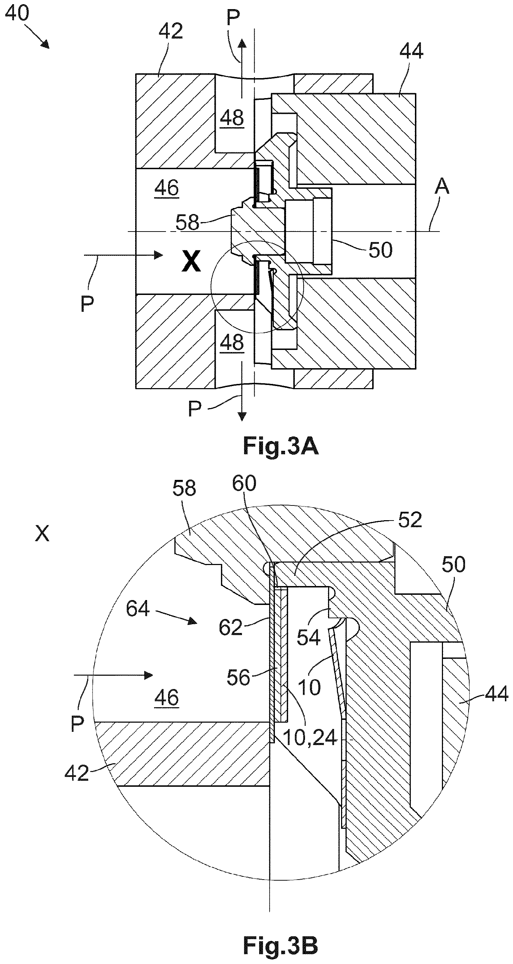

In Figur 3A ist ein Ausführungsbeispiel eines Rückschlagventils 40 anhand einer Schnittdarstellung im montierten Zustand gezeigt. In Figur 3B ist der in Figur 3A gekennzeichnete Ausschnitt X vergrößert dargestellt. Das Rückschlagventil 40 weist einen Basiskörper 42 und einen Verschlusskörper 44 auf. Der Basiskörper 42 definiert eine Ventillängsachse A sowie einen ersten Kanal 46 und eine Anzahl von zweiten Kanälen 48. Der erste Kanal 46 verläuft entlang der Ventillängsachse A, während die zweiten Kanäle 48 senkrecht hierzu verlaufen. Die zweiten Kanäle 48 sind teilweise entlang der Ventillängsachse A geöffnet, bezogen auf die Darstellung der Figur 3A nach rechts. Folglich werden die zweiten Kanäle 48 erst mit Einsetzen des Verschlusskörpers 44 in den Basiskörper 42 vollständig verschlossen. Daher ist es notwendig, dass der Verschlusskörper 44 dichtend in den Basiskörper 42 eingesetzt wird, was beispielsweise mit nicht dargestellten O-Ringen oder mittels eines Presssitzes geschehen kann.

Zwischen dem Basiskörper 42 und dem Verschlusskörper 44 ist ein Aufnahmekörper 50 angeordnet. Der Aufnahmekörper 50 erfüllt die Funktion eines Montagedorns, so dass die Feder 10 auf den Aufnahmekörper 50 aufgeschoben werden kann, wobei der Aufnahmekörper 50 den Aufnahmedurchbruch 28 der Feder 10 mit einem Aufnahmeabschnitt 52 durchdringt. Die Position der Feder 10 ist somit radial ausreichend festgelegt. Der Aufnahmekörper 50 bildet weiterhin einen Absatz 54, an den die Dichtscheibe 56 anschlagen kann, wodurch der maximale Federweg der Federarme 20 begrenzt und somit eine zu starke Biegung der Federarme 20 verhindert wird.

Wie insbesondere aus der Figur 3B hervorgeht, ist auf den Aufnahmekörper 50 zusätzlich eine Dichtscheibe 56 aufgeschoben, wozu die Dichtscheibe 56 eine Aufnahmeöffnung 60 aufweist. Um zu verhindern, dass sich die Dichtscheibe 56 und die Feder 10 axial vom Aufnahmekörper 50 lösen können, ist ein Anschlagkörper 58 mit dem Aufnahmekörper 50 verbunden, beispielsweise durch Verpressen oder Verschrauben. Der Anschlagkörper 58 ragt radial nach außen über den Aufnahmeabschnitt 52 über. Die Federarme 20 liegen an der Dichtscheibe 56 an und drücken sie gegen den Anschlagkörper 58, der die axiale Bewegbarkeit der Dichtscheibe 56 begrenzt.

Aus Figur 3B ist erkennbar, dass der Durchmesser der Aufnahmeöffnung 60 etwas größer ist als der Durchmesser des Aufnahmeabschnitts 52. Hierdurch wird verhindert, dass bei einer ungleichmäßigen Belastung der Dichtscheibe 56, die eine Drehung der Dichtscheibe 56 um eine senkrecht zur Ventillängsachse A verlaufende Drehachse nach sich zieht, nicht zu einem Verklemmen der Dichtscheibe 56 auf dem Aufnahmeabschnitt 52 führt.

Wie ebenfalls aus Figur 3B hervorgeht, ist ein scheibenförmiger Toleranzausgleichskörper 62 vorgesehen, der zwischen dem Aufnahmekörper 50 und dem Anschlagkörper 58 klemmend an diesen befestigt ist. Radial außen liegt der Toleranzausgleichskörper 62 am Basiskörper 42 an. Die Dichtscheibe 56 wird von der Feder 10 gegen den Toleranzausgleichskörper 62 gedrückt. Die Dicke des Toleranzausgleichskörper 62 und der Dichtscheibe 56 kann variiert werden, um Toleranzen beispielsweise der Feder 10 auszugleichen und deren Rückstellkraft einzustellen.

Der Anschlagkörper 58 und der Basiskörper 42 bilden einen Ventilsitz 64, gegen den die Dichtscheibe 56 gedrückt wird, wenn die Feder 10 nicht belastet wird. Hierdurch wird auch das Rückschlagventil 40 geschlossen. Das Rückschlagventil 40 weist daher einen ringförmigen Spalt auf, der von der Dichtscheibe 56 verschließbar ist. Anzumerken ist, dass der Toleranzausgleichskörper 62 in der Draufsicht im Wesentlichen zwei konzentrische Kreisringe umfasst, die mit einer Anzahl radial verlaufender Stege verbunden werden. Die Schnittebene der Figuren 3A und 3B verläuft durch einige dieser Stege, so dass der Eindruck entsteht, das Rückschlagventil 40 würde vom Toleranzausgleichskörper 62 verschlossen, was aber nur im Bereich der Stege zutrifft. Da in diesem Ausführungsbeispiel der Toleranzausgleichskörper 62 sowohl auf dem Aufnahmekörper 50 als auch auf dem Basiskörper 42 aufliegt und die Dichtscheibe 56 gegen den Toleranzausgleichskörper 62 gedrückt wird, wird der Ventilsitz 64 auch vom Toleranzausgleichskörper 62 gebildet. Die Verwendung des Toleranzausgleichskörpers 62 ist aber nicht zwingend notwendig.

Das Rückschlagventil 40 ist ausschließlich fluidgesteuert. Strömt ein Fluid entlang der mit den Pfeilen P der Figur 3A gekennzeichneten Richtung durch den ersten Kanal 46, so bringt das Fluid eine Fluidkraft auf die Dichtscheibe 56 auf, die infolgedessen entlang der Ventillängsachse A weg vom Toleranzausgleichskörper 62 bewegt wird. Aufgrund dieser Bewegung werden die Federarme 20 gebogen, wodurch diese eine Rückstellkraft auf die Dichtscheibe 56 aufbringen, welche der Fluidkraft entgegenwirkt. Die Dichtscheibe 56 kommt dort zum Stehen, wo die Fluidkraft und die Rückstellkraft gleich groß sind. Infolge der Bewegung der Dichtscheibe 56 weg vom Toleranzausgleichskörper 62 wird das Rückschlagventil 40 geöffnet und das Fluid kann das Rückschlagventil 40 über die zweiten Kanäle 48 verlassen. Verringert sich die Strömungsgeschwindigkeit, stoppt die Strömung oder kehrt sich die Strömungsrichtung um, so verringert sich die Fluidkraft oder die Fluidkraft wirkt in die entgegengesetzte Richtung auf die Dichtscheibe 56. Infolgedessen wird die Dichtscheibe 56 wieder gegen den Toleranzausgleichskörper 62 gedrückt und schließt das Rückschlagventil 40.

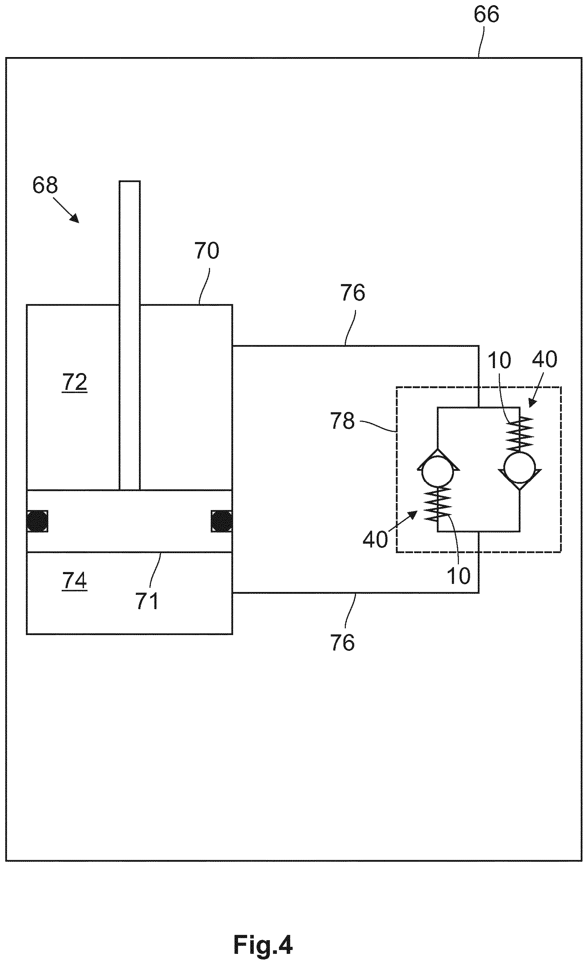

In Figur 4 ist ein Kraftfahrzeug 66 anhand einer Prinzipskizze dargestellt, welches einen regelbaren Schwingungsdämpfer 68, der in diesem Fall als Stoßdämpfer ausgebildet ist, umfasst. Der Schwingungsdämpfer 68 weist einen Arbeitszylinder 70 auf, in welchem ein Kolben 71 hin- und her bewegbar angeordnet ist. Der Kolben 71 unterteilt den Arbeitszylinder 70 in einen ersten Arbeitsraum 72 und einen zweiten Arbeitsraum 74. Der erste Arbeitsraum 72 und der zweite Arbeitsraum 74 sind über jeweils eine Druckmittelleitung 76 mit einer Ventileinrichtung 78 verbunden. Mit dieser Ventileinrichtung 78 können der erste und der zweite Arbeitsraum 72, 74 mit einem Druckmittel, beispielsweise einer Hydraulikflüssigkeit oder Druckluft, auf die gewünschte Weise beaufschlagt werden, wodurch der Schwingungsdämpfer 68 regelbar wird. Die hierzu in der Ventileinrichtung 78 angeordneten hydraulischen oder pneumatischen Baueinheit sind nicht gesondert dargestellt, allerdings kann sich der Aufbau der Ventileinrichtung 78 beispielsweise an dem der in der DE 38 03 888 A gezeigten Ventileinrichtung 78 orientieren. Die in der Figur 4 gezeigte Ventileinrichtung 78 umfasst zumindest ein erfindungsgemäßes Rückschlagventil 40, welches in den Figuren 3A und 3B dargestellt ist, wobei das Rückschlagventil 40 eine Feder 10 gemäß den Figuren 1 oder 2 aufweist. Im in Figur 4 dargestellten Beispiel weist die Ventileinrichtung 78 zwei Rückschlagventile 40 auf, welche parallel geschaltet sind, aber in entgegengesetzte Richtungen öffnen und schließen. Bei der Verwendung von unterschiedlichen Federn 10 können unterschiedliche Druckverhältnisse im ersten und im zweiten Arbeitsraum 72, 74 und regelbare und richtungsabhängige Dämpfungseigenschaften des Schwingungsdämpfers realisiert werden.

### Bezugszeichenliste

- 10: Feder
- 12: Grundkörper
- 16: erste Oberfläche
- 18: zweite Oberfläche

- 20: Federarm
- 22: freies Ende
- 24: Anlagebereich
- 26: Anschlagabschnitt
- 28: Aufnahmedurchbruch

- 30: kreisbogenförmiger Abschnitt
- 32: Verdrehsicherungsabschnitt
- 34: Kante
- 36: Bohrung
- 38: Erweiterung

- 40: Rückschlagventil
- 42: Basiskörper
- 44: Verschlusskörper
- 46: erster Kanal
- 48: zweiter Kanal

- 50: Aufnahmekörper
- 52: Aufnahmeabschnitt
- 54: Absatz
- 56: Dichtscheibe
- 58: Anschlagkörper

- 60: Aufnahmeöffnung
- 62: Toleranzausgleichskörper
- 64: Ventilsitz
- 66: Kraftfahrzeug
- 68: Schwingungsdämpfer

- 70: Arbeitszylinder
- 71: Kolben
- 72: erster Arbeitsraum
- 74: zweiter Arbeitsraum
- 76: Druckmittelleitung
- 78: Ventileinrichtung

- A: Ventillängsachse
- B: Biegelinie
- C: Kreis
- L: Längsachse
- M: Mittelpunkt
- P: Pfeil
- R: Rille
- X: Federachse

## Patentansprüche

1. Feder für ein Rückschlagventil (40), welches insbesondere in regelbaren Schwingungsdämpfern (68) verwendbar ist, umfassend
- einen flächigen Grundkörper (12) mit einer ersten Oberfläche (16) und einer zweiten Oberfläche (18) sowie einem Mittelpunkt (M),
- zwei oder mehrere Federarme (20), die federnd mit dem Grundkörper (12) zusammenwirken und die sich im entlasteten Zustand von der ersten Oberfläche (16) oder der zweiten Oberfläche (18) erheben, wobei
- die Federarme (20) ein freies Ende (22) bilden und eine Längsachse (L) aufweisen, welche durch das freie Ende (22) und tangential zu einem Kreis (C) um den Mittelpunkt (M) des Grundkörpers (12) verläuft
**dadurch gekennzeichnet, dass** die Federarme (20) jeweils eine Biegelinie (B) mit dem Grundkörper (12) bilden und der Grundkörper (12) parallel zueinander verlaufende Rillen (R) aufweist, wobei die Biegelinien (B) nicht parallel zu den Rillen (R) verlaufen.

2. Feder nach Anspruch 1,
**dadurch gekennzeichnet, dass** die Federarme (20) vom Grundkörper (12) gebildet werden.

3. Feder nach einem der vorherigen Ansprüche,
**dadurch gekennzeichnet, dass** die Federarme (20) jeweils eine Biegelinie (B) mit dem Grundkörper (12) bilden, welche senkrecht zur Längsachse (L) verlaufen.

4. Feder nach einem der vorherigen Ansprüche,
**dadurch gekennzeichnet, dass** die Federarme (20) jeweils einen das freie Ende (22) umfassenden Anlagebereich (24) aufweisen, der gegenüber dem übrigen Federarm (20) abgewinkelt ist.

5. Feder nach einem der vorherigen Ansprüche,
**dadurch gekennzeichnet, dass** der Grundkörper (12) Anschlagabschnitte (26) aufweist, an welche benachbart angeordneten Bauteile anschlagen.

6. Feder nach einem der vorherigen Ansprüche,
**dadurch gekennzeichnet, dass** der Grundkörper (12) einen Aufnahmedurchbruch (28) aufweist.

7. Feder nach Anspruch 6,
**dadurch gekennzeichnet, dass** der Aufnahmedurchbruch (28) zumindest abschnittsweise von den Federarmen (20) begrenzt wird.

8. Feder nach einem der vorherigen Ansprüche,
**dadurch gekennzeichnet, dass** der Grundkörper (12) zumindest einen Verdrehsicherungsabschnitt (32) aufweist, um die Feder (10) gegenüber einem benachbart angeordneten Bauteil verdrehsicher festzulegen.

9. Rückschlagventil (40) insbesondere für regelbare Schwingungsdämpfer (68), umfassend
- einen Ventilsitz (64),
- eine Dichtscheibe (56), mit welcher das Rückschlagventil (40) verschließbar oder geschlossen ist, wenn die Dichtscheibe (56) am Ventilsitz (64) anliegt, und
- eine Feder (10) nach einem der vorherigen Ansprüche, mit welcher die Dichtscheibe (56) in Anlage an den Ventilsitz (64) gedrückt wird.

10. Rückschlagventil (40) nach Anspruch 9,
**dadurch gekennzeichnet, dass**
- der Grundkörper (12) der Feder (10) einen Aufnahmedurchbruch (28) aufweist, und
- das Rückschlagventil (40) einen Aufnahmekörper (50) (50) umfasst, auf den die Feder (10) axial bewegbar aufschiebbar ist, wobei der Aufnahmekörper (50) den Aufnahmedurchbruch (28) durchdringt, und einen Anschlagkörper (58) aufweist, mit dem die Bewegbarkeit der Feder (10) gegenüber dem Aufnahmekörper (50) begrenzbar ist.

11. Rückschlagventil (40) nach Anspruch 10,
**dadurch gekennzeichnet, dass** die Dichtscheibe (56) eine Aufnahmeöffnung (60) aufweist und auf den Aufnahmekörper (50) axial bewegbar aufschiebbar ist, wobei der Aufnahmekörper (50) die Aufnahmeöffnung (60) durchdringt und die Bewegbarkeit der Dichtscheibe (56) gegenüber dem Aufnahmekörper (50) mit dem Anschlagkörper (58) begrenzbar ist.

12. Rückschlagventil (40) nach einem der Ansprüche 10 oder 11, **dadurch gekennzeichnet, dass** der Aufnahmekörper (50) zumindest einen Absatz (54) aufweist, gegen welchen die Dichtscheibe (56) anschlägt.

13. Rückschlagventil (40) nach einem der Ansprüche 10 bis 12, **dadurch gekennzeichnet, dass** das Rückschlagventil (40)
- einen Basiskörper (42), der eine Ventillängsachse (A) definiert und zumindest einen im Wesentlichen entlang der Längsachse (L) verlaufenden ersten Kanal (46) und zumindest einen im Wesentlichen senkrecht zur Ventillängsachse (A) verlaufenden zweiten Kanal (48) aufweist, wobei der zweite Kanal (48) entlang der Ventillängsachse (A) einseitig geöffnet ist, und
- einen den zumindest einen zweiten Kanal (48) entlang der Ventillängsachse (A) im montierten Zustand des Rückschlagventils (40) abschließenden Verschlusskörper (44) umfasst, wobei
- der Aufnahmekörper (50) zwischen dem Basiskörper (42) und dem Verschlusskörper (44) angeordnet ist.

14. Rückschlagventil (40) nach Anspruch 13,
**dadurch gekennzeichnet, dass** zwischen dem Aufnahmekörper (50) und dem Anschlagkörper (58) zumindest ein Toleranzausgleichskörper (62) fest angeordnet ist, der im montierten Zustand des Rückschlagventils (40) am Basiskörper (42) oder am Verschlusskörper (44) anliegt.

15. Regelbarer Schwingungsdämpfer (68), insbesondere für Kraftfahrzeuge, mit
- einem Arbeitszylinder (70),
- einem im Arbeitszylinder (70) hin- und her bewegbaren Kolben, der den Arbeitszylinder (70) in einen ersten Arbeitsraum (72) und einen zweiten Arbeitsraum (74) unterteilt, wobei
- der erste Arbeitsraum (72) und der zweite Arbeitsraum (74) über jeweils eine Druckmittelleitung (76) mit einer Ventileinrichtung (78) zum Regeln des Schwingungsdämpfers (68) verbunden sind, und
- die Ventileinrichtung (78) zumindest ein Rückschlagventil (40) nach einem der Ansprüche 9 bis 14 umfasst.

16. Kraftfahrzeug (66), mit einem regelbaren Schwingungsdämpfer (68) nach Anspruch 15.

## Claims

1. Spring for a check valve (40) which is particularly employable in adjustable vibration dampers (68), comprising
- a flat base body (12) with a first surface (16) and with a second surface (18), as well as a center point (M),
- two or more spring arms (20), which resiliently interact with the base body (12) and which, in an unloaded state, rise up from the first surface (16) or from the second surface (18), wherein
- the spring arms (20) form a free end (22) and comprise a longitudinal axis (L) which extends through the free end (22) and tangentially to a circle (C) around the center point (M) of the base body (12),
**characterized in that** each of the spring arms (20) form, together with the base body (12), a bending line (B), and **in that** the base body (12) comprises ridges (R) which extend parallel to each other, wherein the bending lines (B) do not extend parallel to the ridges (R).

2. Spring in accordance with claim 1,
**characterized in that** the spring arms (20) are formed by the base body (12).

3. Spring in accordance with any of the preceding claims,
**characterized in that** each of the spring arms (20) form, together with the base body (12), a bending line (B) which extends vertically to the longitudinal axis (L).

4. Spring in accordance with any of the preceding claims,
**characterized in that** each of the spring arms (20) comprise an abutment part (24) which is at an angle compared to the rest of the spring arm (20).

5. Spring in accordance with any of the preceding claims,
**characterized in that** the base body (12) comprises stopper segments (26), against which adjacently arranged components come to rest.

6. Spring in accordance with any of the preceding claims,
**characterized in that** the base body (12) comprises a receiving perforation (28).

7. Spring in accordance with claim 6,
**characterized in that** the receiving perforation (28) is at least partially limited by the spring arms (20).

8. Spring in accordance with any of the preceding claims,
**characterized in that** the base body (12) comprises an anti-rotation protection segment (32) in order to non-rotatably fixate the spring (10) relative to an adjacently arranged component.

9. Check valve (40), in particular for an adjustable vibration damper (68), comprising
- a valve seat (64),
- a sealing disk (56), by means of which the check valve (40) can be closed or is closed when the sealing disk (50) rests against the valve seat (64), and
- a spring in accordance with any of the preceding claims, by means of which the sealing disk (56) is pressed in abutment against the valve seat (64).

10. Check valve (40) in accordance with claim 9,
**characterized in that**
- the base body (12) of the spring (10) comprises a receiving perforation (28), and
- the check valve (40) includes a receiving body (50), onto which the spring (10) can be axially moveably shifted, wherein the receiving body (50) extends through the receiving perforation (28), and comprises an abutment body (58), by means of which the movability of the spring (10) relative to the receiving body (50) can be limited.

11. Check valve (40) in accordance with claim 10,
**characterized in that** the sealing disk (56) comprises a receiving opening (60) and **in that** it can be axially movably shifted onto the receiving body (50), wherein the receiving body (50) extends through the receiving perforation (28), and the movability of the sealing disk (56) relative to the receiving body (50) is limited by the abutment body (58).

12. Check valve (40) in accordance with either of claims 10 or 11,
**characterized in that** the receiving body (50) comprises at least one ledge (54), against which the sealing disk (56) comes to rest.

13. Check valve (40) in accordance with any of claims 10 to 12,
**characterized in that** the check valve (40) comprises
- a base body (42), which defines a valve longitudinal axis (A) and comprises at least one first channel (46), extending essentially along the longitudinal axis (L), and at least one second channel (48), extending essentially vertically to the valve longitudinal axis (A), wherein the second channel (48) is open on one side along the valve longitudinal axis (A), and
- comprises a closing body (44) which, in an assembled state, closes that at least one second channel (48) along the valve longitudinal axis (A), wherein
- the receiving body (50) is arranged between the base body (42) and the closing body (44).

14. Check valve (40) in accordance with claim 13,
**characterized in that** at least one tolerance compensation body (62) is fixedly arranged between the receiving body (50) and the abutment body (58) which, in an assembled state of the check valve (40), rests against the base body (42) or the closing body (44).

15. Adjustable vibration damper (68), in particular for motor vehicles, having
- a working cylinder (70),
- a piston which is back and forth movable within the working cylinder (70) and which divides the working cylinder (70) into a first working chamber (72) and into a second working chamber (74), wherein
- each of the first working chamber (72) and of the second working chamber (74) is connected via a respective pressure medium line (76) to a valve device (78) for regulating the vibration damper (68), and
- the valve device (78) comprises at least one check valve (40) in accordance with any of claims 9 to 14.

16. Motor vehicle (66) having an adjustable vibration damper (68) in accordance with claim 15.

## Revendications

1. Ressort de soupape d'arrêt (40) utilisé notamment dans des amortisseurs réglables (68) comprenant :
- un corps de base plat (12) ayant une première surface (16) et une seconde surface (18) ainsi qu'un centre (M),
- deux ou plusieurs bras de ressort (20) coopérant élastiquement avec le corps de base (12) et qui, à l'état sollicité, sont en relief de la première surface (16) ou de la seconde surface (18),
- les bras de ressort (20) formant une extrémité libre (22) et ayant un axe longitudinal (L) passant par l'extrémité libre (22) et tangent à un cercle (C) autour du centre (M) du corps de base (12),
ressort **caractérisé en ce que**
les bras de ressort (20) forment une ligne de pliage (B) respective avec le corps de base (12) et le corps de base (12) a des rainures (R) parallèles les unes aux autres, les lignes de pliage (B) n'étant pas parallèles aux rainures (R).

2. Ressort selon la revendication 1,
**caractérisé en ce que**
les bras de ressort (20) sont formés par le corps de base (12).

3. Ressort selon l'une des revendications précédentes,
**caractérisé en ce que**
les bras de ressort (20) forment respectivement une ligne de pliage (B) avec le corps de base (12), cette ligne étant perpendiculaire à l'axe longitudinal (L).

4. Ressort selon l'une des revendications précédentes,
**caractérisé en ce que**
les bras de ressort (20) ont chacun une zone d'appui (24) comprenant l'extrémité libre (22), cette zone étant coudée par rapport au restant du bras de ressort (20).

5. Ressort selon l'une des revendications précédentes,
**caractérisé en ce que**
le corps de base (12) comporte des segments d'appui (26) qui viennent contre des composants voisins.

6. Ressort selon l'une des revendications précédentes,
**caractérisé en ce que**
le corps de base (12) a un passage de réception (28).

7. Ressort selon la revendication 6,
**caractérisé en ce que**
le passage de réception (28) est délimité au moins par segments, par les bras de ressort (20).

8. Ressort selon l'une des revendications précédentes,
**caractérisé en ce que**
le corps de base (12) comporte au moins un segment de blocage en rotation (32) pour fixer en rotation le ressort (10) par rapport à un composant voisin.

9. Soupape d'arrêt (40), notamment pour un amortisseur réglable (68) comprenant :
- un siège de soupape (64),
- une rondelle d'étanchéité (56) qui ferme ou permet de fermer la soupape d'arrêt (40) lorsque le disque d'étanchéité (56) est appliqué contre le siège de soupape (64), et
- un ressort (10) selon l'une des revendications précédentes, par lequel le disque d'étanchéité (56) est poussé en appui contre le siège de soupape (64).

10. Soupape d'arrêt (40) selon la revendication 9,
**caractérisée en ce que**
le corps de base (12) du ressort (10) comporte un passage (28), et
- la soupape d'arrêt (40) a un corps récepteur (50) sur lequel le ressort (10) peut coulisser axialement,
le corps récepteur (50) traversant le passage (28) et ayant un organe de fixation (58) pour limiter la mobilité du ressort (10) par rapport au corps récepteur (50).

11. Soupape d'arrêt (40) selon la revendication 10,
**caractérisée en ce que**
- la rondelle d'étanchéité (56) a un orifice de réception (60) et se glisse axialement sur le corps récepteur (50),
- le corps récepteur (50) traversant l'orifice de passage (60) et limitant la mobilité de la rondelle d'étanchéité (56) par rapport au corps récepteur (50) avec l'organe de fixation (58).

12. Soupape d'arrêt (40) selon l'une des revendications 10 ou 11,
**caractérisée en ce que**
le corps récepteur (50) comporte au moins un épaulement (54) contre lequel bute la rondelle d'étanchéité (56).

13. Soupape d'arrêt (40) selon l'une des revendications 10 à 12,
**caractérisée en ce que**
le clapet antiretour (40) comporte
- un corps de base (42) définissant l'axe longitudinal de soupape (A) et au moins un premier canal (46) pratiquement selon l'axe longitudinal (L) et au moins un second canal (48) pratiquement perpendiculairement à l'axe longitudinal de soupape (A),
* le second canal (48) étant ouvert d'un côté selon l'axe longitudinal de soupape (A), et
- un organe d'obturation (44) fermant au moins le second canal (48) selon l'axe longitudinal de soupape (A) à l'état installé de la soupape d'arrêt (40),
l'organe récepteur (50) étant entre le corps de base (42) et l'organe d'obturation de fermeture (44).

14. Soupape d'arrêt (40) selon la revendication 13,
**caractérisée en ce que**
au moins un organe de compensation de tolérances (62) est installé de manière fixe entre l'organe récepteur (50) et l'organe de butée (58), cet organe compensateur à l'état installé de la soupape d'arrêt (40) s'appliquant contre le corps de base (42) ou contre l'organe d'obturation (44).

15. Amortisseur réglable (68), notamment pour des véhicules automobiles comprenant :
- un cylindre (70),
- un piston mobile alternativement dans le cylindre (70) et subdivisant le cylindre (70) en une première chambre (72) et une seconde chambre (74),
- la première chambre (72) et la seconde chambre (74) étant reliées par une conduite d'agent sous pression (76) avec une installation de soupape (78) pour réguler l'amortisseur (68), et
- l'installation de soupape (78) comporte au moins un clapet d'arrêt (40) selon l'une des revendications 9 à 14.

16. Véhicule automobile (66) comportant un amortisseur réglable (68) selon la revendication 15.
